# FASCICULE DE BREVET EUROPEEN

(11) **EP 1 007 182 B1**
(45) Date de publication et mention de la délivrance du brevet: **05.02.2003**
(21) Numéro de dépôt: 98942762.0
(22) Date de dépôt: 20.08.1998
(51) Int. Cl.: B01D 21/00, B01D 21/01, B01D 36/04, B01D 24/00, B01D 24/26, B01D 24/46

(54) **PROCEDE ET INSTALLATION POUR LE TRAITEMENT DES EAUX INTEGRANT UN DECANTEUR ET UN FILTRE MULTI-COUCHES FONCTIONNANT A GRANDES VITESSES**
VERFAHREN UND VORRICHTUNG ZUR WASSERBEHANDLUNG MIT EINEM KLÄRBEHÄLTER UND EINEM MEHRSICHTIGEN FILTER ZUM BETRIEB BEI HOHEN GESCHWINDIGKEITEN
METHOD AND PLANT FOR TREATING WATER INCORPORATING A SEDIMENTATION TANK AND A MULTILAYER FILTER OPERATING AT HIGH SPEEDS

(30) Priorité: 22.08.1997 FR 9710730
(43) Date de publication de la demande: 14.06.2000
(73) Titulaire: OTV SA, 94417 Saint-Maurice Cedex (FR)
(72) Inventeur: LE PODER, Nicolas, F-78700 Conflans-Sainte-Honorine (FR); SIBONY, Jacques, F-75014 Paris (FR)
(74) Mandataire: Vidon, Patrice
(86) Numéro de dépôt international: FR9801829
(87) Numéro de publication internationale: WO99010071

(56) Documents cités:
- DE-A- 2 427 698
- GB-A- 1 485 007
- US-A- 5 178 773

## Description

La présente invention concerne le domaine du traitement des eaux.

Plus précisément, l'invention concerne un procédé physique ou physico-chimique destiné à diminuer la teneur en matières en suspension ou en parasites de telles eaux, ainsi que l'installation correspondant à ce procédé.

L'invention peut être utilisée pour traiter n'importe quelles eaux contenant des matières en suspension dont il est souhaitable de diminuer la teneur, telles que notamment:
- les eaux usées déjà traitées par voie biologique, dans le but d'affiner l'épuration de celles-ci ;
- les eaux résiduaires destinées à être réutilisées après traitement, par exemple dans l'industrie ou l'agriculture, notamment pour l'irrigation ;
- les eaux destinées à être rejetées en mer ;
- les eaux usées déjà traitées, par voie biologique ou non, dans le but de contrôler la teneur en phosphore résiduel du rejet.

Comme indiqué ci-après, le procédé et l'installation selon l'invention sont particulièrement intéressants pour traiter les matières en suspension contenues dans les eaux destinées à être réutilisées pour l'irrigation.

Il existe dans l'état de la technique plusieurs techniques de traitement des matières en suspension. Parmi ces techniques, on peut citer:
- la décantation physique ou préférentiellement physico-chimique consistant à faire subir à l'eau une clarification éventuellement couplée à un ajout de réactif coagulant visant à augmenter la décantabilité des matières en suspension;
- la filtration sur lit de sable d'épaisseur généralement comprise entre 1,5 et 2 m.

En ce qui concerne les vitesses de traitement appliquées sur les décanteurs de type classique, celles-ci dépassent rarement 2 à 2,5 m/h. Ces vitesses de traitement peuvent être augmentées jusqu'à 10 à 15 m/h lorsque le décanteur utilisé est de type lamellaire et jusqu'à 20 m/h lorsque la décantation lamellaire est couplée à une étape de coagulation-floculation.

Pour obtenir une bonne qualité d'eau, l'art antérieur préconise d'utiliser les lits de sable avec une vitesse de filtration maximale de 10 m/h.

Ces deux types de traitement présentent donc tous les deux l'inconvénient de ne pouvoir être mis en oeuvre à des vitesses élevées ce qui oblige à utiliser des installations de grandes dimensions impliquant des coûts de génie civil importants.

L'objectif principal de la présente invention est de proposer un procédé de traitement des eaux destiné à abattre leur teneur en matières en suspension et le cas échéant en parasites (les oeufs d'helminthes notamment) permettant de travailler avec des ouvrages compacts de dimensions réduites par rapport aux installations de l'état de la technique, en obtenant une qualité d'eau traitée suffisante pour répondre aux exigences, par exemple pour une réutilisation telle que celles mentionnées ci-dessus.

Cet objectif est atteint grâce à l'invention qui concerne un procédé de traitement des eaux usées visant à abattre leur teneur en matières en suspension et, le cas échéant, en parasites consistant à faire transiter lesdites eaux dans un décanteur, ou plusieurs décanteurs mis en parallèle, selon une vitesse de traitement supérieure à 20 m/h puis, selon un flux ascendant, dans un filtre multi-couches à granulométrie décroissante, ou plusieurs filtres multi-couches à granulométrie décroissante en parallèle, selon une vitesse de traitement supérieure à 10 m/h.

L'invention propose donc de traiter les matières en suspension et, le cas échéant les parsasites, en mettant en oeuvre un décanteur fonctionnant à vitesse élevée (c'est-à-dire à une vitesse supérieure à la vitesse classique préconisée par l'art antérieur pour la mise en oeuvre d'un tel décanteur) et un filtre multi-couches à granulométrie décroissante selon le sens ascendant de filtration fonctionnant également à vitesse élevée.

Comme précisé ci-dessus, il était connu de traiter les matières en suspension, soit par décantation, soit par filtration sur lit de sable. Toutefois, il n'avait jamais été proposé, à la connaissance de la Demanderesse:
- de coupler un tel décanteur à un filtre granulaire, notamment pas à un type très particulier de filtre, à savoir un filtre multi-couches à granulométrie décroissante et à courant ascendant,
- ni d'utiliser des vitesses de traitement élevées dans ce type de dispositif.

La Demanderesse a constaté que, de façon très surprenante, l'utilisation de vitesses de traitement plus élevées que celles préconisées dans l'état de la technique à la fois dans le décanteur et dans le filtre granulaire permettait, dans le cadre d'une telle combinaison de moyens techniques, d'obtenir :
- un très bon niveau d'abattement des matières en suspension et des parasites comme les oeufs d'helminthes et;
- des vitesses d'encrassement du filtre nettement inférieures à celles obtenues en filtration classique.

Un tel résultat ne découle pas de l'art antérieur qui ne préconisait pas l'association d'un décanteur et d'un filtre multi-couches ascendant et qui prévoyait des vitesses de traitement bien inférieures à celles proposées par l'invention pour obtenir un bon niveau d'épuration. Un tel résultat va également à l'encontre du préjugé de l'homme de l'art selon lequel la qualité de l'épuration diminue avec la vitesse de traitement.

Selon une variante préférentielle de l'invention, ledit procédé comprend une étape intermédiaire consistant à tamiser lesdites eaux entre leur sortie dudit décanteur et leur entrée dans ledit filtre. L'utilisation d'un tel tamisage permet de protéger le faux-fond du filtre granulaire, c'est-à-dire d'éviter l'accumulation de boues dans l'espace prévu dans la partie inférieure du filtre sous le matériau granulaire, espace dans lequel sont amenées les eaux provenant du décanteur. Un tel tamisage permet également de retenir les filasses et les autres éléments colmatants qui peuvent être contenus dans les eaux provenant du décanteur.

Cette étape intermédiaire présente les intérêts majeurs, par rapport au tamisage effectué en tête de traitement habituellement préconisé par l'état de la technique, d'être plus économique car mise en oeuvre sur des eaux moins chargées, et de protéger d'une manière plus directe les filtres même en cas de défaillance du système de décantation.

On pourra envisager de mettre en oeuvre le décanteur sans ajoût d'agent coagulant. Dans ce cadre, des vitesses de traitement allant jusqu'à 30 m/h pourront être utilisées dans ce dispositif.

Toutefois, le décanteur utilisé pour la mise en oeuvre du procédé selon l'invention sera préférentiellement un décanteur à floc lesté par ajoût d'au moins un agent coagulant. Dans ce cas, la vitesse de traitement utilisée dans celui-ci pourra être d'au moins 35 m/h. De façon préférée entre toutes, le décanteur utilisé est un décanteur à floc lesté lamellaire. Dans ce cadre, la vitesse de traitement utilisée peut-être d'au moins 60 m/h et peut aller jusqu' à 200 m/h.

Ces vitesses sont bien supérieures aux vitesses préconisées par l'art antérieur pour ce type d'installations qui, comme déjà indiquées ci-dessus ne dépassent pas 20 m/h, même dans le cas des décanteurs lamellaires à flocs lestés.

Ce type de décanteurs est notamment décrit dans les brevets français FR 2627704 et FR 2719734 au nom de la Demanderesse. Leur utilisation dans le cadre du procédé selon l'invention permet donc d'augmenter encore les vitesses de traitement et donc la compacité des ouvrages.

D'ordinaire, les procédés de traitement par floculation-décantation sont mis en oeuvre en prévoyant un système d'injection du réactif coagulant visant à disperser rapidement et énergiquement le réactif dans les eaux à traiter.

Contrairement à cet enseignement de l'état de la technique, la Demanderesse préconise d'injecter le réactif coagulant directement dans la cuve de mélange rapide du décanteur à floc lesté dans un zone peu turbulente et éloignée des courants principaux ou encore d'injecter le réactif après une forte dilution préalable permettant d'injecter le coagulant sous forme de précipités de fer ou d'aluminium majoritairement constitués d'hydroxydes.

En effet, il a été constaté, de façon surprenante, que l'utilisation de tels modes d'injection permettaient de limiter sensiblement l'élimination des phosphates voire même de la contrôler sans nuire à l'abattement des matières en suspension.

Cette adaptation du procédé est particulièrement intéressante dans le cas des eaux destinées à être réutilisées pour l'irrigation qui conservent ainsi une teneur en phosphates suffisante.

Dans cette variante préférentielle, la possiblité offerte de contrôler la teneur en phosphore résiduel en fonction du type d'application sans dégrader l'abattement des matières en suspension, sans être limité sur les quantités de réactifs ajoutées et sur les valeurs de phosphore résiduel très basses, est particulièrement intéressante.

Selon une variante préférentielle du procédé, celui-ci comprend une étape supplémentaire consistant à injecter au moins un réactif floculant dans lesdites eaux en amont dudit filtre.

Selon une autre variante préférentielle de l'invention, la vitesse de traitement utilisée dans le filtre granulaire multicouches à courant ascendant est comprise entre 25 m/h et 45 m/h.

Selon un autre aspect de l'invention, le lavage du filtre est effectué préférentiellement en faisant transiter de l'eau décantée à co-courant dans ledit filtre et en dérivant le courant d'eau sale sortant alors du filtre. Un tel mode de lavage permet d'effectuer celui-ci sans avoir recours à des pompes ou à un stockage d'eau filtrée de lavage, ce qui permet de diminuer le coût et la complexité du procédé.

Lorsque l'on choisira d'utiliser plusieurs filtres en parallèles, le lavage par eau décantée d'un filtre pourra être effectué simplement en augmentant le débit d'eau dans ledit filtre au détriment d'un ou plusieurs autres filtres.

Une telle opération de lavage peut être effectuée avec un injection concomitante, continue ou intermittente, d'air dans le matériau filtrant, dans le but d'améliorer son efficacité. On pourra également prévoir d'injecter systématiquement ou de temps en temps un agent désinfectant, tel que du chlore dans l'eau servant au lavage.

Egalement selon une variante, le procédé selon l'invention est mis en oeuvre en amont d'une installation de traitement biologique des eaux usées. Il peut également être mis en oeuvre en aval d'une installation de traitement dont il permet d'améliorer les performances et/ou les conditions de fonctionnement.

L'invention concerne également une installation pour la mise en oeuvre du procédé décrit ci-dessus caractérisée en ce qu'elle est constituée par l'association d'au moins un décanteur suivi d'au moins un filtre multi-couches à granulométrie décroissante dans le sens ascendant de filtration.

Préférentiellement, l'installation comprend au moins un tamis prévu entre ledit décanteur et ledit filtre, de maille comprise entre 0,5 et 5 mm, préférentiellement entre 500 µm et 2 mm.

Avantageusement, ledit décanteur est un decanteur à floc lesté, préférentiellement lamellaire.

Selon une variante de l'invention, ledit filtre multi-couches comprend au moins une couche de graviers et au moins une couche de sable.

Préférentiellement, l'installation comprend également un dispositif de désinfection situé en amont dudit filtre.

Enfin, également préférentiellement, l'installation comprend des moyens permettant d'extraire en cours de cycle de filtration par une ou plusieurs chasses gravitaires au moins une partie des matières retenues dans le fond dudit filtre.

L'invention, ainsi que les différents avantages qu'elle présente seront plus facilement compris grâce à la description qui va suivre d'un mode de réalisation non limitatif de celle-ci en référence aux dessins dans lesquels :
- la figure 1 représente une vue schématique d'une installation pour la mise en oeuvre du procédé selon l'invention ;
- la figure 2 représente un graphe montrant les courbes d'abattements des matières en suspension obtenus grâce à l'invention et, à titre comparatif, avec un procédé ne mettant pas en oeuvre de filtre multi-couches à courant ascendant ;
- la figure 3 représente un graphe montrant les courbes d'encrassement dans le filtre multi-couches utilisé dans le cadre du procédé selon l'invention et dans un filtre classique ;
- la figure 4 représente un graphe montrant les courbes d'évolution des pertes de charges dans le filtre multi-couches utilisé dans le cadre du procédé selon l'invention et dans un filtre classique.

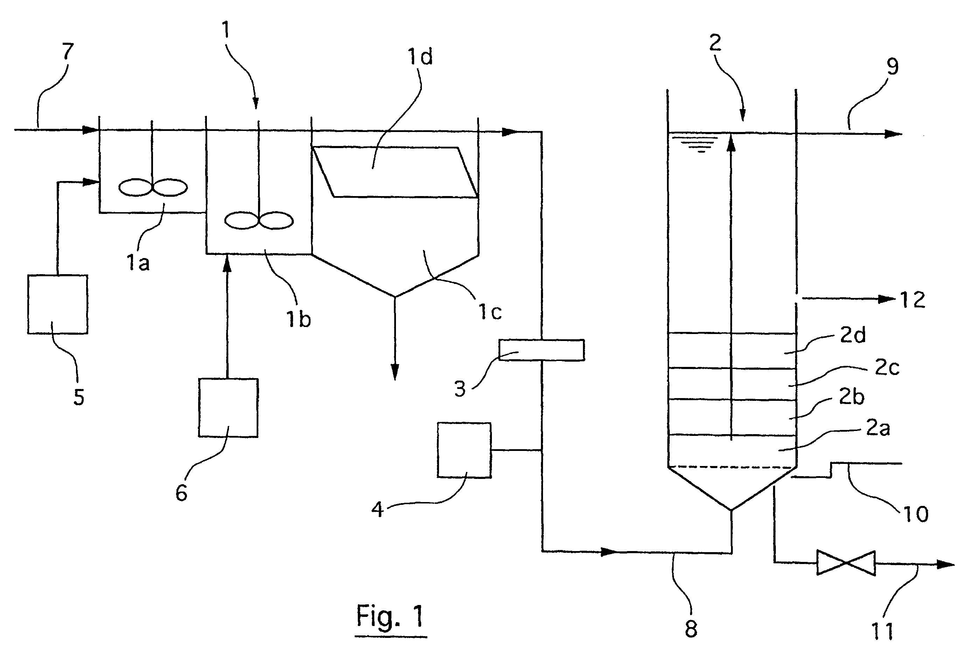

En référence à la figure 1, l'installation est constituée par un décanteur 1 à floc lesté de type lamellaire, d'un filtre multi-couches 2 à courant ascendant et d'un tamis 3 prévu entre ce décanteur et le filtre 2.

Le décanteur 1 à floc lesté comprend deux compartiments amonts 1a et 1b et un compartiment formant clarificateur 1c pourvu de lamelles inclinées 1d. Des moyens de distribution 5 d'un agent coagulant sont prévus pour distribuer un tel agent dans le compartiment 1a et des moyens de distribution 6 d'un réactif floculant sont prévus sur le compartiment 1b.

Le filtre multi-couches 2 comprend quatre couches superposées de graviers 2a,2b et de sable 2c,2d formant matériaux filtrants. La couche 2a est constitué de gros gravier de 10 à 20 mm de diamètre et présente une épaisseur de 0,2 m. La couche 2b est constitué de petit gravier de 5 à 10 mm de diamètre et présente une épaisseur de 0,5 m. La couche 2c est constitué de gros sable de 2,5 à 5 mm de diamètre et présente une épaisseur de 0,3 m. La couche 2d est constitué de petit sable de 1,5 à 3 mm de diamètre et présente une épaisseur de 0,2 m. Il n'agit bien évidemment là que d'un exemple de réalisation du filtre multi-couches qui pourra, dans d'autres modes de réalisation présenter une autre structure sans sortir du cadre de l'invention.

Le filtre comprend également des moyens d'amenée 8 de l'eau provenant du décanteur lamellaire à flocs lestés 1 prévus dans sa partie inférieure et des moyens d'évacuation 9 de l'eau ayant transité dans le matériau filtrant prévus dans la partie supérieure du filtre. Le filtre est par ailleurs pourvu de moyens d'injection d'air 10, et d'évacuation des eaux par chasse gravitaire 11 et des eaux de lavage par surverse 12.

Le tamis 3 prévu entre le décanteur 1 et le filtre granulaire 2 présente une maille de 1 mm.

L'installation présente également préférentiellement des moyens d'injection 4 d'un désinfectant prévus immédiatement en amont du filtre.

Le lavage du filtre peut facilement être effectué à l'aide d'eau décantée provenant du décanteur 1 et en dérivant l'eau sale sortant du filtre. L'efficacité du lavage est renforcée en distribuant dans l'eau décantée un composé désinfectant tel que le chlore grâce aux moyens d'injection 4 et/ou en mettant en oeuvre une injection d'air dans le matériau de filtration grâce aux moyens 10.

Conformément à la présente invention, l'installation représentée à été mise en oeuvre avec une vitesse de traitement dans le décanteur de 120 m/h et une vitesse de traitement dans le filtre multi-couches de 30 m/h.

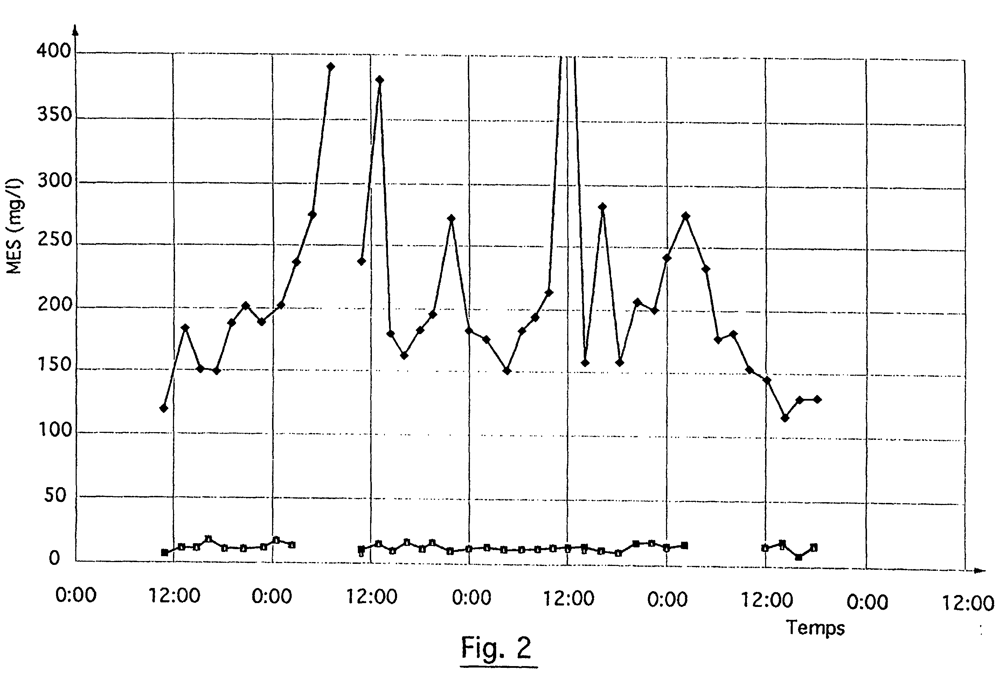

Les résultats obtenus pendant 4 jours de fonctionnement sur l'abattement des matières en suspension sont données à la figure 2. Sur cette figure, la teneur avant traitement des eaux en matières en suspension est indiquée sur la courbe du haut, et la teneur après traitement selon l'invention est indiquée par la courbe sur laquelle les points de mesure apparaissent sous forme de triangles.

Des essais comparatifs ont été effectués sur une installation du type de celle décrite en référence à la figure 1 mais intégrant un filtre classique avec une vitesse de filtration de 10 m/h. Les résultats obtenus pendant 4 jours de fonctionnement sur l'abattement des matières en suspension sont également portés sur la figure 2 (courbe sur laquelle les points de mesure apparaissent sous forme de triangles)..

La comparaison de ces deux dernières courbes permet de constater que les qualités d'eau obtenues sont quasiment identiques. L'utilisation de vitesse élevées de traitement dans le filtre ascendant multi-couches selon l'invention n'entraîne donc pas une détérioration de la qualité du traitement.

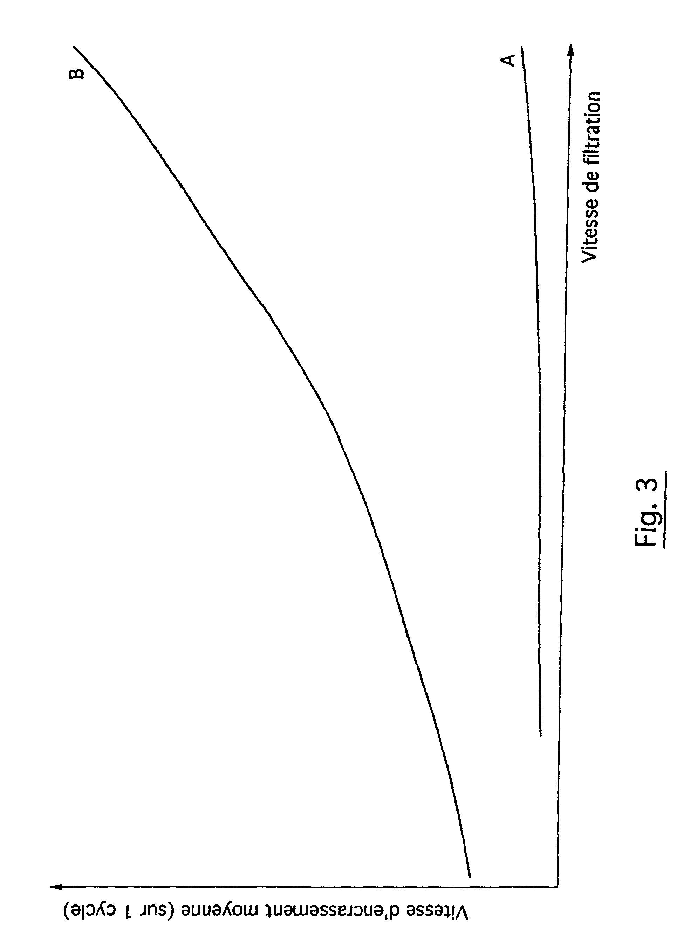

La figure 3 montre quant à elle l'intérêt de l'invention par rapport à une solution classique du point de vue de la vitesse de l'encrassement du filtre. En effet, non seulement l'encrassement est nettement plus lent (entre 5 et 10 fois) dans le cas de l'invention (voir courbe A) que dans le cadre d'un filtre mono-couche classique (voir courbe B) mais en plus, cet encrassement ne s'accélère pas lorsque les vitesses de filtration augmentent, contrairement aux solutions classiques.

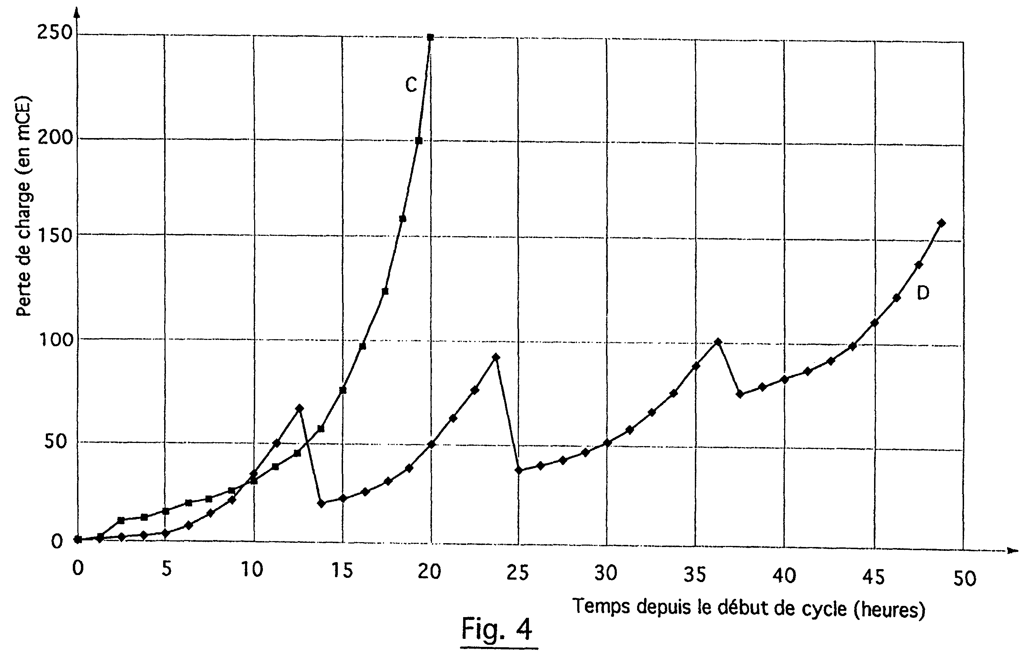

La figure 4 montre un exemple de l'évolution des pertes de charge au cours d'un cycle pour un filtre classique (courbe C) et pour un filtre multi-couches ascendant (courbe D). On peut remarquer l'évolution nettement plus lente des pertes de charge sur la filtration multi-couches ainsi que l'efficacité des chasses gravitaires effectuées en cours de cycle.

On notera que l'installation selon la présente invention présente des dimensions réduites par rapport aux installations de l'état de la technique. Le type d'ouvrage la composant permet de traiter tant les eaux par temps sec que par temps de pluie. De plus, il est possible de diminuer les doses de réactifs utilisées dans le décanteur par rapport aux doses nécessaires quand un décanteur seul est utilisé.

Le mode de réalisation de l'invention ici décrit n'a pas pour objet de limiter l'étendue de l'invention telle que définie dans les revendications. En particulier, comme on l'a déjà remarqué, on pourra utiliser non pas un seul filtre mais une batterie de filtres fonctionnant en parallèle.

## Revendications

1. Procédé de traitement des eaux visant à abattre leur teneur en matières en suspension et, le cas échéant en parasites, consistant à faire transiter lesdites eaux dans un décanteur (I), ou plusieurs décanteurs mis en parallèle, selon une vitesse de traitement supérieure à 20 m/h puis, selon un flux ascendant, dans un filtre multi-couches à granulométrie décroissante (2), ou dans plusieurs filtres multi-couches à granulométrie décroissante en parallèle, selon une vitesse de traitement supérieure à 10 m/h.

2. Procédé selon la revendication 1 **caractérisé en ce qu'**il comprend une étape intermédiaire consistant à tamiser lesdites eaux entre leur sortie dudit décanteur (1) et leur entrée dans ledit filtre (2).

3. Procédé selon la revendication 1 ou 2 **caractérisé en ce que** ledit décanteur (1) est un décanteur à floc lesté par addition d'au moins un agent coagulant et **en ce que** la vitesse de traitement utilisée est d'au moins 35 m/h.

4. Procédé selon la revendication 3 **caractérisé en ce que** ledit décanteur (1) est un décanteur à floc lesté par addition d'au moins un agent coagulant présentant une structure lamellaire et **en ce que** la vitesse de traitement utilisée est d'au moins 80 m/h.

5. Procédé selon l'une des revendications 1 à 4 **caractérisé en ce que** lesdites eaux sont des eaux destinées à être réutilisés pour l'irrigation.

6. Procédé selon la revendication 5 **caractérisé en ce que** ledit agent coagulant est injecté dans une cuve du décanteur à floc lesté dans une zone peu turbulente de celle-ci.

7. Procédé selon la revendication 5 ou 6 **caractérisé en ce qu'**il comprend une étape consistant à diluer fortement l'agent coagulant avant de l'introduire dans ledit décanteur.

8. Procédé selon l'une des revendications 4 ou 5 **caractérisé en ce qu'**il comprend une étape supplémentaire consistant à injecter au moins un réactif floculant dans lesdites eaux en amont dudit filtre.

9. Procédé selon l'une quelconque des revendications 1 à 8 **caractérisé en ce qu'**il consiste à faire transiter lesdites eaux dans ledit filtre multi-couches de granulométrie décroissante selon une vitesse comprise entre 25 m/h et 45 m/h.

10. Procédé selon l'une quelconque des revendications 1 à 9 **caractérisée en ce qu'**il comprend une étape de lavage dudit filtre consistant à faire transiter de l'eau décantée, éventuellement additionnée d'un agent désinfectant, à co-courant dans ledit filtre et à dériver selon le courant d'eau sale sortant du filtre.

11. Procédé selon la revendication 10 **caractérisé en ce que** ladite étape de lavage est effectuée et en mettant en oeuvre une injection intermittente ou continue d'air dans le matériau filtrant constituant celui-ci.

12. Procédé selon l'une des revendications 1 à 11 **caractérisé en ce qu'**il est mis en oeuvre en aval d'une installation de traitement biologique des eaux usées.

13. Procédé selon l'une des revendications 1 à 11 **caractérisé en ce qu'**il est mis en oeuvre en aval d'une installation de traitement dont il permet d'améliorer les performances et/ou les conditions de fonctionnement.

14. Installation pour la mise en oeuvre du procédé selon l'une des revendications 1 à 13, constituée par l'association d'un décanteur (1) ou de plusieurs décanteurs en parallèle suivi d'un filtre multi-couches (2) ou de plusieurs filtres multi-couches en parallèle à granulométrie décroissante dans le sens ascendant de filtration.

15. Installation selon la revendication 14 **caractérisée en ce qu'**elle comprend au moins un tamis (3) prévu entre ledit décanteur (1) et ledit filtre (2), de maille comprise entre 0,5 et 5 mm, préférentiellement entre 500 µm et 2 mm.

16. Installation selon l'une des revendications 14 ou 15 **caractérisée en ce que** ledit décanteur (1) est un décanteur à floc lesté.

17. Installation selon la revendication 16 **caractérisée en ce que** ledit décanteur (1) est un décanteur à floc lesté lamellaire.

18. Installation selon l'une quelconques des revendications 14 à 17 **caractérisée en ce que** ledit filtre multi-couches comprend au moins une couche de graviers (2a) et au moins une couche de sable (2b).

19. Installation selon l'une quelconque des revendications 14 à 18 **caractérisée en ce qu'**elle comprend un dispositif de désinfection (4) situé en amont dudit filtre (2).

20. Installation selon l'une des revendications 14 à 19 **caractérisée en ce qu'**elle comprend des moyens (11) permettant d'extraire en cours de cycle de filtration par une ou plusieurs chasses gravitaires au moins une partie des matières retenues dans le fond dudit filtre.

## Patentansprüche

1. Verfahren zur Wasserbehandlung zum Zweck der Verringerung des Inhaltes an suspendierten Stoffen oder gegebenenfalls an Parasiten, darin bestehend, dass dieses Wasser durch eine Dekantiervorrichtung (1) oder durch mehrere parallel angelegte Dekantiervorrichtungen mit einer Behandlungsgeschwindigkeit von mehr als 20 m/h geleitet wird, und dann nach fortschreitender Strömung durch ein mehrlagiges Filter abnehmender Körnung (2) oder durch mehrere parallel angelegte mehrlagige Filter abnehmender Körnung mit einer Behandlungsgeschwindigkeit von mehr als 10 m/h geleitet wird.

2. Verfahren nach Anspruch 1, **dadurch gekennzeichnet, dass** es einen Zwischenschritt umfasst, bei dem das behandelte Wasser zwischen dem Auslaufen aus der Dekantiervorrichtung (1) und dem Einlaufen in dem Filter (2) gesiebt wird.

3. Verfahren nach einem der Ansprüche 1 oder 2, **dadurch gekennzeichnet, dass** es sich bei der Dekantiervorrichtung (1) um eine beschwerte Flocken-Dekantiervorrichtung handelt, wobei die Flocken durch Zugabe von mindestens einem Gerinnungsmittel beschwert werden und, dass die angewandte Behandlungsgeschwindigkeit mindestens 35 m/h beträgt.

4. Verfahren nach Anspruch 3, **dadurch gekennzeichnet, dass** es sich bei der Dekantiervorrichtung (1) um eine beschwerte Flocken-Dekantiervorrichtung handelt, wobei die Flocken durch Zugabe von mindestens einem Gerinnungsmittel beschwert werden, welches eine Lamellenstruktur aufweist und, dass die angewandte Behandlungsgeschwindigkeit mindestens 80 m/h beträgt.

5. Verfahren nach einem der Ansprüche 1 bis 4, **dadurch gekennzeichnet, dass** das behandelte Wasser zur Bewässerung wiederverwendet werden soll.

6. Verfahren nach Anspruch 5, **dadurch gekennzeichnet, dass** das Gerinnungsmittel in einem Bereich eines Gefäßes der beschwerten Flocken-Dekantiervorrichtung eingeleitet wird, in dem nur geringe Turbulenzen vorherrschen.

7. Verfahren nach einem der Ansprüche 5 oder 6, **dadurch gekennzeichnet, dass** es einen Schritt umfasst, bei dem das Gerinnungsmittel vor dem Einleiten in die Dekantiervorrichtung stark verdünnt wird.

8. Verfahren nach einem der Ansprüche 4 oder 5, **dadurch gekennzeichnet, dass** es einen zusätzlichen Schritt umfasst, der darin besteht, dass dem zu behandelnden Wasser vor dem Filter mindestens ein flockenbildendes Reagens zugegeben wird.

9. Verfahren nach einem der Ansprüche 1 bis 8, **dadurch gekennzeichnet, dass** das Wasser durch ein mehrlagiges Filter abnehmender Körnung mit einer Behandlungsgeschwindigkeit zwischen 25 m/h und 45 m/h geleitet wird.

10. Verfahren nach einem der Ansprüche 1 bis 9, **dadurch gekennzeichnet, dass** es einen Schritt zum Waschen des Filters aufweist, wobei dekantiertes Wasser, welchem gegebenenfalls ein Desinfektionsmittel zugegeben wurde, bei gleicher Strömungsrichtung durch den Filter geleitet wird, und wobei der danach aus dem Filter austretende verschmutzte Wasserstrom abgeleitet wird.

11. Verfahren nach Anspruch 10, **dadurch gekennzeichnet, dass** der Schritt zum Waschen durch das intermittierende oder kontinuierliche Einleiten von Luft in das Filtermaterial des Verfahrens realisiert wird.

12. Verfahren nach einem der Ansprüche 1 bis 11, **dadurch gekennzeichnet, dass** es stromabwärts nach einer biologischen Abwasserbehandlungsanlage eingesetzt wird.

13. Verfahren nach einem der Ansprüche 1 bis 11, **dadurch gekennzeichnet, dass** es stromabwärts nach einer Wasserbehandlungsanlage eingesetzt wird, wobei es deren Leistungsfähigkeit erhöht und/oder deren Betriebsbedingungen verbessert.

14. Anlage zum Anwenden eines Verfahrens nach einem der Ansprüche 1 bis 13, bestehend aus der Zusammensetzung einer Dekantiervorrichtung (1) oder mehrerer parallel angelegter Dekantiervorrichtungen, gefolgt von einem mehrlagigen Filter (2) oder von mehreren parallel angelegten mehrlagigen Filtern mit abnehmender Körnung in steigender Filterrichtung.

15. Anlage nach Anspruch 14, **dadurch gekennzeichnet, dass** sie über mindestens ein Sieb (3) verfügt, das zwischen der Dekantiervorrichtung (1) und dem Filter (2) angebracht ist, wobei die Maschenweite zwischen 0,5 und 5 mm, bevorzugterweise zwischen 500 µm und 2 mm liegt.

16. Anlage nach einem der Ansprüche 14 oder 15, **dadurch gekennzeichnet, dass** die Dekantiervorrichtung (1) von der Art mit gewichteten Flocken ist.

17. Anlage nach Anspruch 16, **dadurch gekennzeichnet, dass** die Dekantiervorrichtung (1) von der Art mit gewichteten Flocken und lamellenartig ist.

18. Anlage nach einem der Ansprüche 14 bis 17, **dadurch gekennzeichnet, dass** der mehrlagige Filter mindestens eine Lage Kies (2a) und mindestens eine Lage Sand (2b) aufweist.

19. Anlage nach einem der Ansprüche 14 bis 18, **dadurch gekennzeichnet, dass** sie über eine vor dem Filter (2) angebrachte Desinfektionsvorrichtung (4) verfügt.

20. Anlage nach einem der Ansprüche 14 bis 19, **dadurch gekennzeichnet, dass** sie über Mittel (11) verfügt, mit denen während des Filterungszyklus zumindest ein Teil der am Boden des Filters zurückgehaltenen Stoffe durch eine oder mehrere durch die Schwerkraft betriebene Abscheidvorrichtungen herausgezogen werden können.

## Claims

1. Method for treating water aimed at reducing its content of suspended materials and, as the case may be, of parasites, consisting of passing the said water through a sedimentation tank (1) or several sedimentation tanks in parallel, at a treatment rate greater than 20 m/h and then, in an ascending flow, in a multi-layer filter having a decreasing particle size (2), or in several multilayer filters having a decreasing particle size in parallel, at a treatment rate greater than 10 m/h.

2. Method according to claim 1, **characterized in that** it includes an intermediate step consisting of sieving the said water between its outlet point from the said sedimentation tank (1) and its entry point into the said filter (2).

3. Method according to claim 1 or 2 **characterized in that** the said sedimentation tank (1) is a floc sedimentation tank ballasted by the addition of at least one coagulating agent and **in that** the treatment rate used is at least 35 m/h.

4. Method according to claim 3 **characterized in that** the said sedimentation tank (1) is a floc sedimentation tank ballasted by the addition of at least one coagulating agent having a lamellar structure and **in that** the treatment rate used is at least 80 m/h.

5. Method according to one of claims 1 to 4 **characterized in that** the said water is water intended to be reused for irrigation.

6. Method according to claim 5 **characterized in that** the said coagulating agent is injected into a vessel of the ballasted floc sedimentation tank in its zone of minimum turbulence.

7. Method according to claim 5 or 6 **characterized in that** it includes a step consisting of highly diluting the coagulating agent before introducing it into the said sedimentation tank.

8. Method according to either of claims 4 or 5 **characterized in that** it includes a supplementary step consisting of injecting at least one flocculating reagent into the said water upstream from the said filter.

9. Method according to any one of claims 1 to 8 **characterized in that** it consists of passing the said water through the said multi-layer filter having a decreasing particle size at a rate of between 25 m/h and 45 m/h.

10. Method according to any one of claims 1 to 9 **characterized in that** it includes a step of washing the said filter, consisting of passing the decanted water, optionally with the addition of a disinfecting agent, in counter-current through the said filter and bypassing it. according to the flow of contaminated water leaving the filter.

11. Method according to claim 10 **characterized in that** the said washing step is carried out while operating an intermittent or continuous injection of air into the filtration material constituting this.

12. Method according to one of claims 1 to 11 **characterized in that** it is carried out downstream from an installation for the biological treatment of waste water.

13. Method according to one of claims 1 to 11 **characterized in that** it is put into operation downstream of a treatment installation of which it enables the performance and/or operating conditions to be improved.

14. Installation for implementing the method according to one of claims 1 to 13, consisting of the association of a sedimentation tank (1) or of several sedimentation tanks in parallel followed by a multi-layer filter (2) or several multi-layer filters in parallel having a particle size decreasing in the ascending direction of filtration.

15. Installation according to claim 14 **characterized in that** it includes at least one sieve (3) provided between the said sedimentation tank (1) of the said filter (2), with a mesh size of between 0.5 and 5 mm, preferably between 500 µm and 2 mm.

16. Installation according to either of claims 14 or 15 **characterized in that** the said sedimentation tank (1) is a ballasted floc sedimentation tank.

17. Installation according to claim 16 **characterized in that** the said sedimentation tank (1) is a lamellar ballasted floc sedimentation tank.

18. Installation according to any one of claims 14 to 17 **characterized in that** the said multi-layer filter includes at least one gravel layer (2a) and at least one sand layer (2b).

19. Installation according to any one of claims 14 to 18 **characterized in that** it includes a disinfecting device (14) situated upstream from the said filter (2).

20. Installation according to one of claims 14 to 19 **characterized in that** it includes means (11) making it possible to extract, during the filtration cycle by one or more gravity flushes, at least part of the materials retained in the bottom of the said filter.
